# EUROPEAN PATENT APPLICATION

(11) **EP 4 421 673 A1**
(43) Date of publication of application: **28.08.2024**
(21) Application number: 24157722.0
(22) Date of filing: 15.02.2024
(51) Int. Cl.: G06F 40/169

(54) **INFORMATION PROCESSING DEVICE, INFORMATION PROCESSING METHOD, AND PROGRAM**

(30) Priority: 27.02.2023 JP 2023027964
(71) Applicant: Casio Computer Co., Ltd., Tokyo 151-8543 (JP)
(72) Inventor: KATO, Risa, Tokyo, 205-8555 (JP)
(74) Representative: Plougmann Vingtoft a/s

(57) **Abstract**

An information processing device executes processing of generating an object arrangement screen which is a screen shareable among a plurality of users corresponding to a plurality of accounts and on which a plurality of objects is arranged, displaying the object arrangement screen on a display screen of a display device operated by each of the plurality of users, detecting whether or not a first user among the plurality of users is in an editing state having an edit authority for a first object among the objects on the object arrangement screen, and displaying, in response to detecting that the first user is in the editing state, the plurality of objects and the first object such that it is distinguishable that the first object is in the editing state in which the first user has the edit authority, on a display screen of a display device operated by a user other than the first user among the plurality of display devices.

## Description

### Technical Field

The disclosure of the present specification relates to an information processing device, an information processing method, and a program.

### Background Art

In an information processing device such as a personal computer (PC) or a tablet terminal, a technology of arranging and displaying, at an optional position on a display area (screen) created by inputting various types of information, an electronic sticky note to which display content (sticky note information) such as an optional comment is input has been put into practical use.

The electronic sticky note is, for example, a display object capable of displaying text or the like that a user wants to leave as a memo, and has a predetermined shape and size. The electronic sticky note is displayed at an optional position specified by the user in the predetermined display area. For the electronic sticky note, movement of the display position, creation, deletion, addition of display content, and editing can be performed according to a user operation.

On the other hand, as disclosed in JP 2021-533456 A, a method of adding an icon regarding privacy and importance to an object such as an image uploaded to a common work space is known.

### Summary of Invention

### Technical Problem

In an operation on this type of the work space, it is possible to call attention of another participant to an operation on the uploaded object by adding the icon regarding privacy and importance to the object. However, there is still room for improvement in usability of the work space when such an object is collaboratively edited.

The present invention has been made in view of the above circumstances, and an object of the present invention is to improve usability when an object is collaboratively edited.

### Solution to Problem

An information processing device according to one embodiment of the present disclosure includes a control unit configured to execute processing of generating an object arrangement screen which is a screen shareable among a plurality of users corresponding to a plurality of accounts and on which a plurality of objects is arranged, displaying the object arrangement screen on a display screen of a display device operated by each of the plurality of users, detecting whether or not a first user among the plurality of users is in an editing state having an edit authority for a first object among the objects on the object arrangement screen, and displaying, in response to detecting that the first user is in the editing state, the plurality of objects and the first object such that it is distinguishable that the first object is in the editing state in which the first user has the edit authority, on a display screen of a display device operated by a user other than the first user among the plurality of display devices.

### Advantageous Effects of Invention

According to one embodiment of the present disclosure, it is possible to improve usability when an object is collaboratively edited.

### Brief Description of Drawings

Fig. 1 is a diagram illustrating an overall configuration of an information processing system according to an embodiment.
Fig. 2 is a block diagram illustrating a configuration of an electronic circuit of an information processing server according to the embodiment.
Fig. 3 is a diagram illustrating contents of a sticky note management table stored in a sticky note management table data storage area of the information processing server according to the embodiment.
Fig. 4 is a block diagram illustrating a configuration of an electronic circuit of a user terminal according to the embodiment.
Fig. 5 is a flowchart illustrating electronic sticky note creation processing executed by the information processing server according to the embodiment.
Fig. 6 is a diagram illustrating an example of a screen displayed on a display unit of the user terminal when the electronic sticky note creation processing illustrated in Fig. 5 is executed.
Fig. 7 is a diagram illustrating an example of a screen displayed on the display unit of the user terminal when the electronic sticky note creation processing illustrated in Fig. 5 is executed.
Fig. 8 is a diagram illustrating an example of a screen displayed on the display unit of the user terminal when the electronic sticky note creation processing illustrated in Fig. 5 is executed.
Fig. 9 is a flowchart illustrating line connection processing executed by the information processing server according to the one embodiment of the present invention.
Fig. 10 is a diagram illustrating an example of a screen displayed on the display unit of the user terminal when the line connection processing illustrated in Fig. 9 is executed.
Fig. 11 is a flowchart illustrating electronic sticky note opening/closing processing executed by the information processing server according to the embodiment.
Fig. 12 is a diagram illustrating an example of a screen displayed on the display unit of the user terminal when the electronic sticky note opening/closing processing illustrated in Fig. 11 is executed.
Fig. 13 is a flowchart illustrating group registration processing executed by the information processing server according to the embodiment.
Fig. 14 is a diagram illustrating an example of a screen displayed on the display unit of the user terminal when the group registration processing illustrated in Fig. 13 is executed.
Fig. 15 is a diagram illustrating an example of a screen displayed on the display unit of the user terminal when the group registration processing illustrated in Fig. 13 is executed.
Fig. 16 is a diagram illustrating an example of a screen displayed on the display unit of the user terminal when the group registration processing illustrated in Fig. 13 is executed.
Fig. 17 is a diagram illustrating an example of a screen displayed on the display unit of the user terminal when the group registration processing illustrated in Fig. 13 is executed.
Fig. 18 is a flowchart illustrating group work processing executed by the information processing server according to the embodiment.
Fig. 19 is a diagram illustrating an example of a screen displayed on the display unit of the user terminal when the group work processing illustrated in Fig. 18 is executed.
Fig. 20 is a diagram illustrating an example of a screen displayed on the display unit of the user terminal when the group work processing illustrated in Fig. 18 is executed.
Fig. 21 is a diagram illustrating an example of a screen displayed on the display unit of the user terminal when the group work processing illustrated in Fig. 18 is executed.
Fig. 22 is a diagram illustrating an example of a screen displayed on the display unit of the user terminal when the group work processing illustrated in Fig. 18 is executed.
Fig. 23 is a diagram illustrating an example of a screen displayed on the display unit of the user terminal when the group work processing illustrated in Fig. 18 is executed.
Fig. 24 is a diagram illustrating an example of a screen displayed on the display unit of the user terminal when the group work processing illustrated in Fig. 18 is executed.

### Description of Embodiments

An information processing device, an information processing method executed by the information processing device as an example of a computer, and a program according to an embodiment of the present disclosure will be described in detail with reference to the drawings.

### (Configuration of Embodiment)

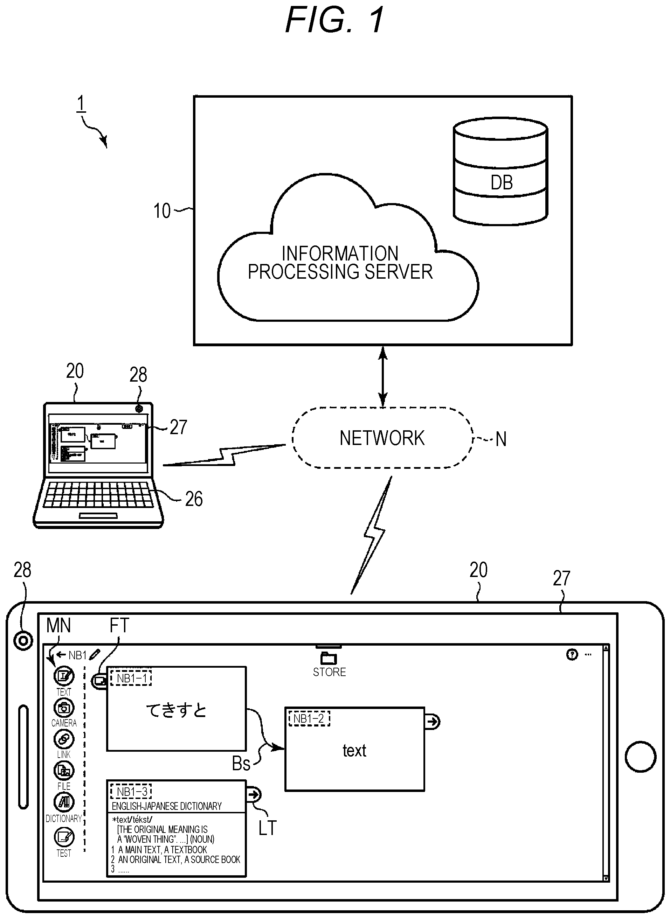

Fig. 1 is a diagram illustrating an overall configuration of an information processing system 1 according to the embodiment of the present disclosure.

The information processing system 1 includes an information processing server 10 (server device) provided on a network N such as the Internet and a user terminal 20 (communication device) communicatively connected to the information processing server 10.

The information processing server 10 is a dedicated server that connects an information processing server use application for using the information processing server 10 and a cloud service. Note that both the information processing server 10 and the user terminal 20 can be the information processing device according to the present invention.

The user terminal 20 is, for example, a tablet terminal, a smartphone, a PC, an electronic dictionary, a mobile phone, an electronic book, a portable game machine, or the like having a communication function.

Although Fig. 1 illustrates two user terminals 20 communicatively connected to the information processing server 10, more user terminals 20 may be communicatively connected to the information processing server 10.

The information processing server use application (information processing server use app) is installed in the user terminal 20.

### <Function of Information Processing Server 10>

The information processing server 10 has at least the following functions (10a) to (10h) in a state of being communicatively connected to the user terminal 20 according to the information processing server use app of the user terminal 20.

### <<Function (10a)>>

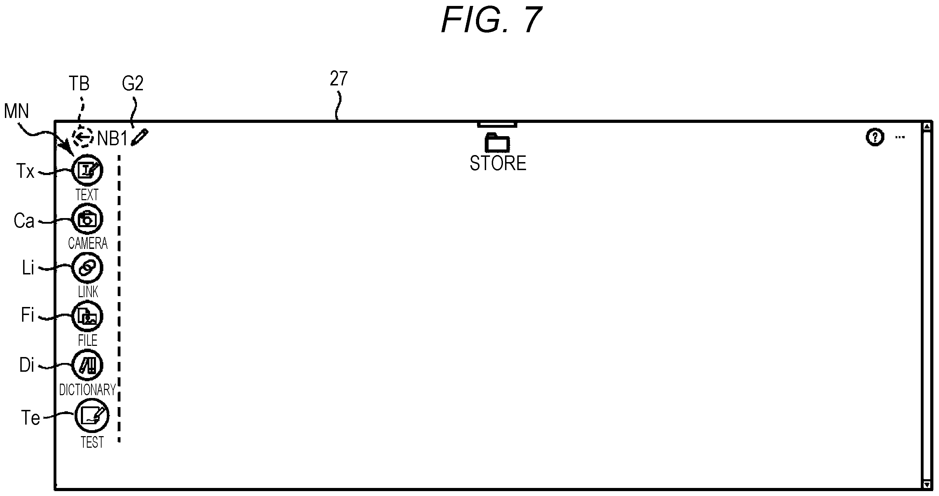

A function of creating a notebook screen G2 according to an operation of the user terminal 20 and displaying the created notebook screen G2 on a display unit 27 of the user terminal 20 (see, for example, Fig. 7). The notebook screen G2 is a display area (notebook NBm) in which a user can input and display optional information. Note that a symbol m indicates a natural number.

### <<Function (10b)>>

A function of creating, according to a user operation on a notebook menu MN provided on the notebook screen G2, an electronic sticky note NBm-n to which information of a type selected from the notebook menu MN is input, and displaying the created electronic sticky note NBm-n at an optional position of the user in a notebook NB1. Note that a symbol n indicates a natural number.

### <<Function (10c)>>

A function of moving a [line connection] tab LT added to a right end of the electronic sticky note NBm-n (in Fig. 1, an electronic sticky note NB 1-1) to another electronic sticky note (in Fig. 1, an electronic sticky note NB 1-2) in the notebook NBm (in Fig. 1, the notebook NB1) according to a user operation, and organizing the electronic sticky note NB 1-1 and the electronic sticky note NB1-2 by sequentially connecting (performing line connection of) the electronic sticky note NB1-1 and the electronic sticky note NB1-2 in a line with a connection arrow Bs of a predetermined color (for example, blue).

### <<Function (10d)>>

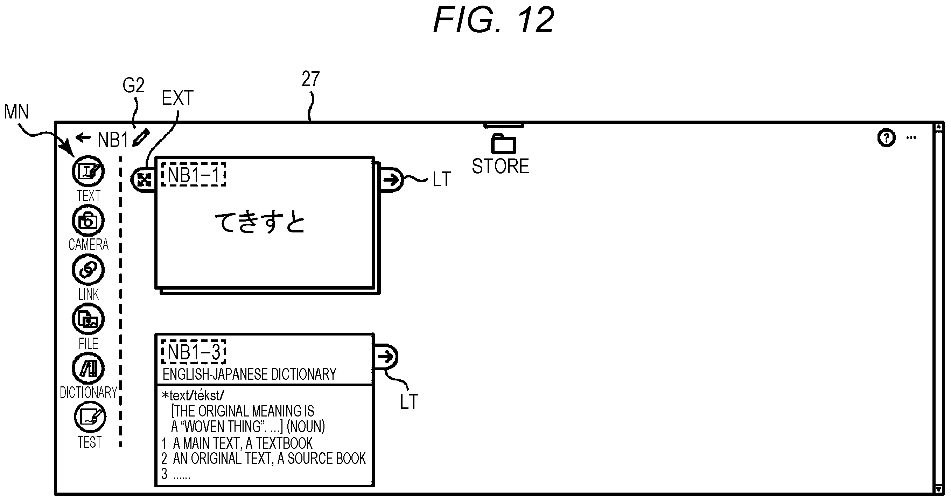

A function of performing folding so that, among the plurality of electronic sticky notes (in Fig. 1, the electronic sticky notes NB 1-1 and NB 1-2) organized by performing the connection (line connection) sequentially in a line, the first electronic sticky note (in Fig. 1, the electronic sticky note NB1-1) is on top and the second and subsequent electronic sticky notes (in Fig. 1, the electronic sticky note NB 1-2) are below the first electronic sticky note to switch from an expanded state to be displayed within a predetermined range, according to a user operation on a [fold] tab FT added to a left end of the first electronic sticky note NB 1-1 (see, for example, Fig. 12).

### <<Function (10e)>>

A function of displaying, in the expanded manner as before, the plurality of electronic sticky notes (for example, the electronic sticky notes NB 1-1 and NB 1-2) displayed in the folded manner according to a user operation on an [expand] tab EXT (see, for example, Fig. 12) added to the left end of the first electronic sticky note (for example, the electronic sticky note NB 1-1) among the plurality of electronic sticky notes (for example, the electronic sticky notes NB 1-1 and NB 1-2).

### <<Function (10f)>>

A function of switching and displaying, like a slide show, the plurality of electronic sticky notes (for example, the electronic sticky notes NB 1-1 to NB 1-n) sequentially connected (subjected to line connection) in a line in an enlarged state sequentially from the first electronic sticky note (for example, the electronic sticky note NB 1-1) to the last electronic sticky note (for example, an electronic sticky note NB 1-n), according to a display mode selected according to a user operation.

### <<Function (10g)>>

A function of setting up and registering a group work space (notebook screen G5) which is a screen that can be shared by a plurality of accounts and on which the electronic sticky note NBm-n that can be edited by the accounts is arranged. Note that the account may be appropriately rephrased as a user, a user identifier (ID), the user terminal 20, or the like.

### <<Function (10h)>>

A function of displaying the notebook screen G5 which is the screen that can be shared by the plurality of accounts and on which the electronic sticky note NBm-n that can be edited by the accounts is arranged on the display screen (for example, the display unit 27 of the user terminal 20) of each of the plurality of accounts, detecting whether or not the electronic sticky note NBm-n is in an editing state in a certain account participating in a group work, and, in response to detecting that the electronic sticky note NBm-n is in the editing state in the certain account, displaying, in another account, the electronic sticky note NBm-n on the display screen so as to be distinguishable from another electronic sticky note NBm-n.

Note that, in the present embodiment, the connection of the electronic sticky notes is mainly to connect the plurality of the electronic sticky notes NBm-n sequentially in a line.

Furthermore, in the present embodiment, an expression of "organizing" the plurality of electronic sticky notes NBm-n may be used including bringing into a state where the plurality of electronic sticky notes NBm-n are classified and grouped so that the electronic sticky notes NBm-n can be identified and a state where the order can be identified.

Furthermore, in the present embodiment, a symbol NBm (NB1, NB2, or the like) indicates a notebook ID (identification information). The symbol NBm may be read as a notebook name input by the user. Furthermore, a symbol NBm-n (NB1-1, NB1-2, or the like) indicates an electronic sticky note ID created in the notebook NBm. The symbol NBm-n may be read as an electronic sticky note name input by the user.

Specifically, the notebook name may be, for example, a subject name of a subject that the user is learning, and the electronic sticky note name may be, for example, a unit name in the subject or a learning date and time.

### <Electronic Circuit of Information Processing Server 10>

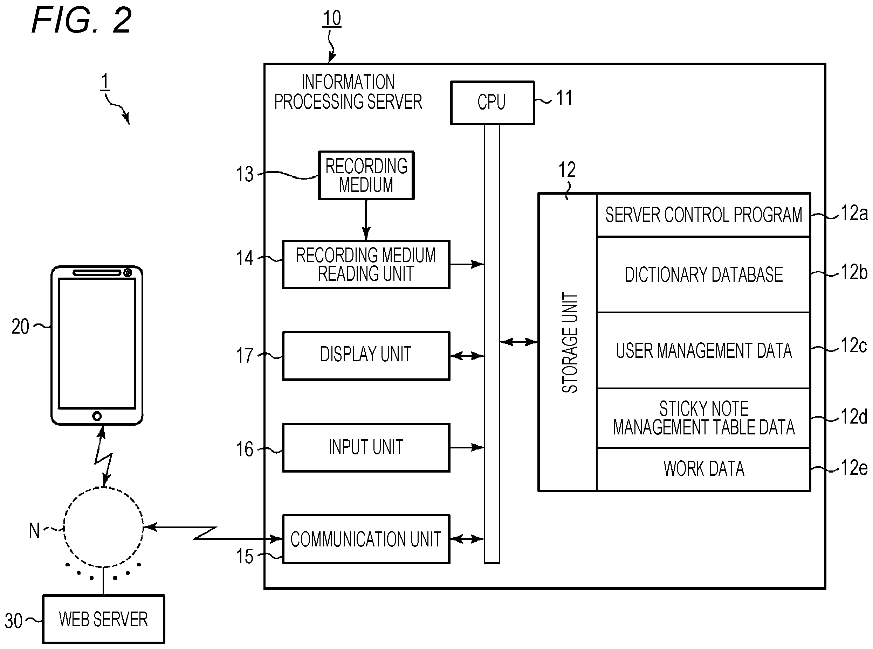

Fig. 2 is a block diagram illustrating a configuration of an electronic circuit of the information processing server 10.

The electronic circuit of the information processing server 10 includes a control unit (central processing unit (CPU)) 11 that is a computer, a storage unit 12, a recording medium reading unit 14, a communication unit 15, an input unit 16, and a display unit 17.

The control unit 11 controls, according to a server control program 12a stored in the storage unit 12, an operation of each unit of the circuit according to an input signal according to a user operation on the input unit 16 or a reception signal by the communication unit 15 from the user terminal 20 on the network N.

The server control program 12a may be stored in advance in the storage unit 12, may be stored in advance in an external recording medium 13 such as a compact disc read-only memory (CD-ROM) and read in the storage unit 12 via the recording medium reading unit 14, or may be downloaded from a web server (in this case, a program server) 30 on the network N and read and stored in the storage unit 12.

The server control program 12a includes a program for executing at least the above functions (10a) to (10h).

In the storage unit 12, in addition to a storage area of the server control program 12a, a dictionary database storage area 12b, a user management data storage area 12c, a sticky note management table data storage area 12d, and a work data storage area 12e are secured.

In the dictionary database storage area 12b, various types of dictionary data such as an English-Japanese dictionary, a German-Japanese dictionary, a French-Japanese dictionary, and a Japanese dictionary are stored as dictionary data in which words that are entry words are associated with explanatory information such as translations, meanings of the words, example sentences, and explanations corresponding to the entry words.

In the user management data storage area 12c, for each user (user ID (account)) of the user terminal 20 in which the information processing server use app is installed, a password registered by the user, a user attribute (occupation (school), grade, and the like), and data (notebook data) of content of the notebook NBm are stored in association with each other. The notebook data is data including content of the electronic sticky note NBm-n created according to a user operation, and is associated with a notebook ID and an electronic sticky note ID.

In the user management data storage area 12c, for each group (group ID) registered in group work processing described later, a group attribute (grade and class, subject name, unit name, learning date and time, and the like), each user (user ID (account)) participating in the group, a theme (display color or the like) of each user (each participant) participating in the group, and notebook data of a notebook registered in the group work processing are further stored in association with each other.

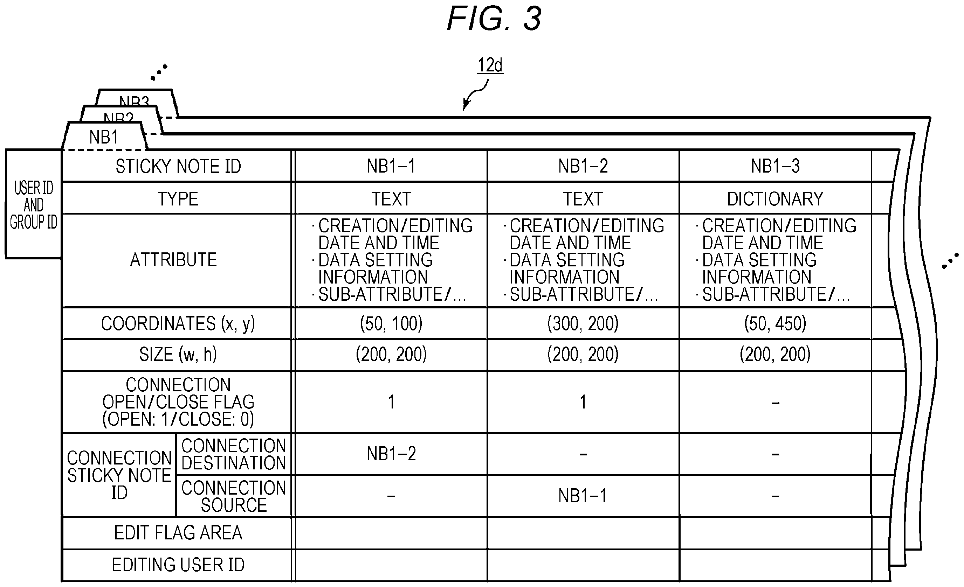

Fig. 3 is a diagram illustrating contents of a sticky note management table (notebook management table) 12d stored in the sticky note management table data storage area 12d of the information processing server 10.

In the sticky note management table (notebook management table) 12d, for each user ID and each group ID stored (registered) in the user management data storage area 12c, an electronic sticky note ID of the electronic sticky note NBm-n included in the notebook NBm, a type of information selected from the notebook menu MN, an attribute (a creation/editing date and time, data setting information such as a data format, a sub-attribute, and the like) of data included in the electronic sticky note NBm-n, coordinates indicating a display position of the electronic sticky note NBm-n on the notebook NBm, a display size of the electronic sticky note NBm-n, a connection open/close flag, a connection sticky note ID, an edit flag area, and an editing user ID are stored and set in association with a notebook ID of the notebook NBm. The connection open/close flag indicates, in a case where an electronic sticky note is subjected to line connection (connected) to another electronic sticky note, whether to display the electronic sticky notes in an expanded manner or in a folded manner. The connection sticky note ID indicates electronic sticky note IDs of a connection destination and a connection source.

Note that, since the connection of the electronic sticky notes in the present embodiment is mainly to connect the plurality of electronic sticky notes (NB 1-n) sequentially in a line, the number of electronic sticky note IDs of each of the connection destination and the connection source stored in the connection sticky note ID is limited to one at most. Thus, in a case where another electronic sticky note ID is already stored in the connection destination/connection source of the connection sticky note ID, new connection to the electronic sticky note is prohibited, so that the connection state of the electronic sticky notes can be prevented from branching into a plurality of columns.

The sticky note management table (notebook management table) 12d collectively stores management information regarding the plurality of electronic sticky notes (NB1-n/NB2-n/NBm-n) included in each of the plurality of notebooks (NB1, NB2,...), and is also a management table of the notebook NBm in which the stored management information can be updated according to creation of the notebook NBm and the electronic sticky note NBm-n included in the notebook NBm and update of information. In particular, for an electronic sticky note whose status is in the editing state, "1" is set in an edit flag and the flag is set, and an editing user ID permitted to perform editing is recorded.

In the work data storage area 12e, various types of data generated or acquired according to control of an operation of each unit by the control unit 11 are temporarily stored as necessary.

In the information processing server 10 configured as described above, the control unit 11 controls the operation of each unit of the circuit according to a command described in the server control program 12a, and software and hardware operate in cooperation with each other, thereby implementing various functions as described in operation description to be described later.

### <Electronic Circuit of User Terminal 20>

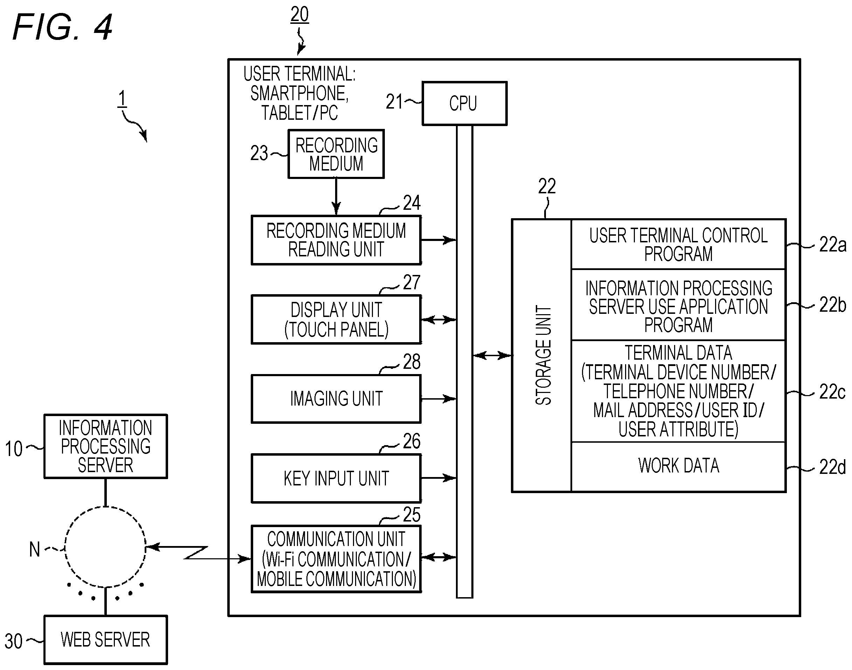

Fig. 4 is a block diagram illustrating a configuration of an electronic circuit of the user terminal 20.

The electronic circuit of the user terminal 20 includes a control unit (CPU) 21 that is a computer, a storage unit 22, a recording medium reading unit 24, a communication unit (Wi-Fi (registered trademark) communication/mobile communication) 25, a key input unit 26, the touch panel type display unit 27, and an imaging unit (camera) 28.

The control unit 21 controls an operation of each unit of the circuit according to a user terminal control program 22a and an information processing server use application (information processing server use app) 22b stored in the storage unit 22. The user terminal control program 22a may be stored in advance in the storage unit 22, may be read by the recording medium reading unit 24 from an external recording medium 23 such as a memory card and stored in the storage unit 22, or may be downloaded from the web server (here, the program server) 30 on the network N via the communication unit 25 and stored in the storage unit 22.

The information processing server use app 22b is downloaded from the web server (for example, the program server of an app store) 30 on the network N via the communication unit 25 and stored in the storage unit 22.

The user terminal control program 22a includes, in addition to a system program for controlling the entire user terminal 20, a program for establishing communication connection with an external communication device including the information processing server 10 and the web server 30 on the network N as needed in cooperation with various application programs stored in the storage unit 22.

The information processing server use app 22b includes a program for executing input/output processing of data according to the above functions (10a) to (10h) by establishing communication connection with the information processing server 10.

In addition to the storage unit 22, the recording medium reading unit 24, and the communication unit 25, the key input unit 26 including a power key and a volume adjustment key, the touch panel type display unit 27, the imaging unit (camera) 28, and the like are connected to the control unit 21 via a system and a data bus.

In the storage unit 22, in addition to a program storage area that stores the user terminal control program 22a and the information processing server use app 22b, a terminal data storage area 22c, a work data storage area 22d, and the like are secured.

In the terminal data storage area 22c, data such as a telephone number, a mail address, a user ID (account), and a user attribute (occupation (school)/grade) is stored as terminal data unique to the user terminal 20, in addition to a terminal device number for establishing communication connection with the external communication device including the information processing server 10 and the web server 30 on the network N.

In the work data storage area 22d, various types of data generated or acquired according to control of an operation of each unit by the control unit 21 are temporarily stored as necessary.

In the user terminal 20 configured as described above, the control unit 21 controls the operation of each unit of the circuit according to a command described in the user terminal control program 22a and the information processing server use app 22b, and software and hardware operate in cooperation with each other, thereby implementing various functions as described in operation description to be described later.

### (Basic Electronic Sticky Note Processing)

Basic electronic sticky note processing executed by the information processing system 1 will be described.

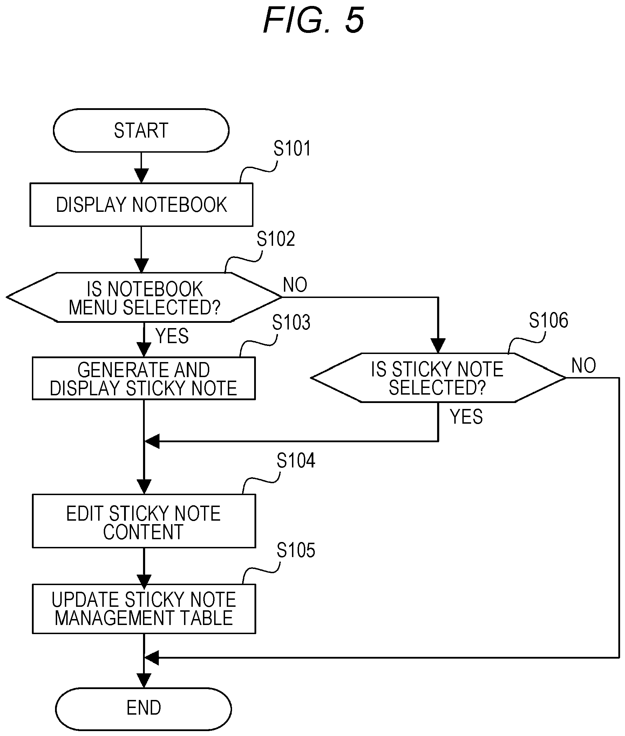

Fig. 5 is a flowchart illustrating electronic sticky note creation processing according to the server control program 12a of the information processing server 10.

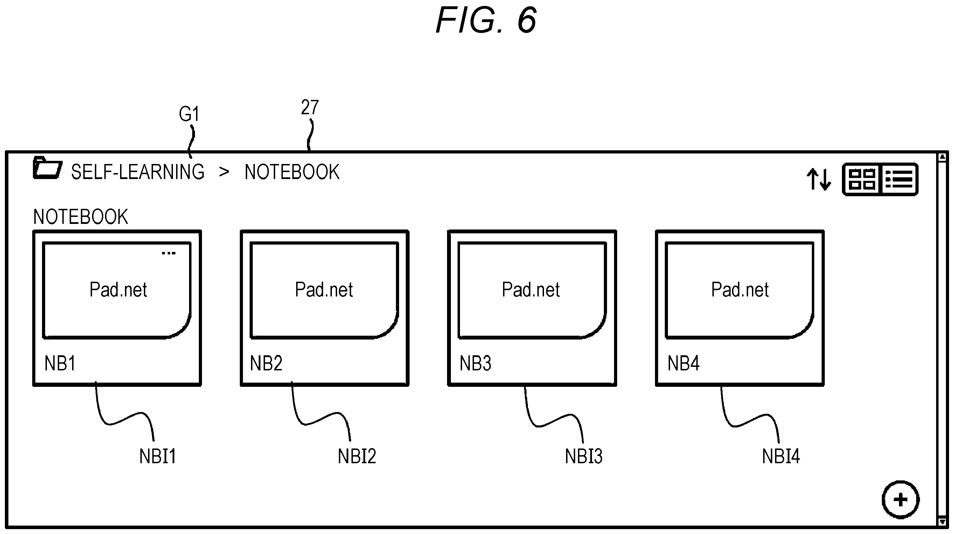

Figs. 6 to 8 are diagrams illustrating examples of screens displayed on the display unit 27 of the user terminal 20 when the electronic sticky note creation processing illustrated in Fig. 5 is executed.

Fig. 6 illustrates an example of a notebook list screen G1 displayed on the display unit 27 of the user terminal 20.

The information processing server 10 is communicatively connected to the user terminal 20 in response to a login request from the user terminal 20. In this state, for example, as illustrated in Fig. 6, the control unit 11 displays the notebook list screen G1 on the display unit 27 of the user terminal 20.

In the notebook list screen G1 of Fig. 6, notebooks NBm (for example, notebooks NB1 to NB4) created according to a user operation are displayed in a list in a form of notebook icons NBI1 to NBI4.

Fig. 7 illustrates an example of the notebook screen G2 displayed on the display unit 27 of the user terminal 20.

It is assumed that a user performs a touch operation on a notebook icon (for example, the notebook icon NBI1) on the notebook list screen G1 to specify the notebook icon. In this case, the control unit 11 reads notebook data of the notebook NB1 specified by the user from the user management data storage area 12c, and displays the notebook data on the display unit 27 as the notebook screen G2 of the notebook NB1 as illustrated in Fig. 7 on the basis of the sticky note management table 12d (step S101).

In the example of Fig. 7, since no electronic sticky note NB1-n is created in the notebook NB1, a space for displaying the electronic sticky note NB1-n is blank.

When the user performs a touch operation on a [←] (close) button TB on the notebook screen G2, the control unit 11 causes the screen of the display unit 27 of the user terminal 20 to perform transition from the notebook screen G2 to the notebook list screen G1.

Note that, in the present embodiment, the touch operation on the display screen may be a click operation by a mouse cursor or a combination of a specification operation and a determination operation by another pointer device.

A case will be described where the user wants to create the electronic sticky note NB1-n to which optional information has been input by attaching the electronic sticky note NB1-n to the notebook NB 1.

As illustrated in Fig. 7, the notebook menu MN is provided at a left end of the notebook screen G2. When the user selects a button (Tx/Ca/Li/Fi/Di/Te) indicating optional type of information from the notebook menu MN (step S102: YES), the control unit 11 creates the electronic sticky note NB1-n according to the selected type of information and displays the electronic sticky note NB1-n in the notebook NB 1 (step S103).

The notebook menu MN includes, for example, a [text] button Tx, a [camera] button Ca, a [link] button Li, a [file] button Fi, a [dictionary] button Di, and a [test] button Te.

When the [text] button Tx is selected, the control unit 11 displays the new electronic sticky note NB 1-n in the notebook NB 1 and starts a text input app of the user terminal 20, and inputs an optional text according to a user operation to the electronic sticky note NB1-n to be displayed, and makes it editable (step S104).

When the [camera] button Ca is selected, the control unit 11 displays the new electronic sticky note NB1-n in the notebook NB1 and starts the imaging unit 28 of the user terminal 20, and inputs an optional photographic image captured by the imaging unit 28 to the electronic sticky note NB1-n to be displayed, and makes it editable (step S104).

When the [link] button Li is selected, the control unit 11 displays the new electronic sticky note NB1-n in the notebook NB 1 and starts a web browser of the user terminal 20, and inputs an optional web page of the user to the electronic sticky note NB1-n to be displayed, and makes it editable (step S104).

When the [file] button Fi is selected, the control unit 11 displays the new electronic sticky note NB 1-n in the notebook NB1 and starts a file operation app of the user terminal 20, and inputs an optional file of the user to the electronic sticky note NB 1-n to be displayed, and makes it editable (step S104).

When the [dictionary] button Di is selected, the control unit 11 displays the new electronic sticky note NB 1-n in the notebook NB1 and starts a dictionary app of the information processing server 10, and searches the dictionary database 12b for an entry word of an optional dictionary of the user and explanatory information thereof to be displayed on the electronic sticky note NB 1-n, and makes it editable (step S104).

When the [test] button Te is selected, the control unit 11 displays the new electronic sticky note NB 1-n in the notebook NB1 and starts a test app of the information processing server 10, and displays a test question specified by the user on the electronic sticky note NB 1-n, so that an input (answer) to the test question is possible (step S104).

Note that the notebook menu MN may include a button for inputting another type of information instead of or in addition to the [text] button Tx, the [camera] button Ca, the [link] button Li, the [file] button Fi, the [dictionary] button Di, and the [test] button Te.

The control unit 11 moves a display position of the electronic sticky note NB 1-n displayed in the notebook NB1 according to a touch operation and dragging (moving) by the user.

The control unit 11 may change a color of the electronic sticky note NB 1-n created in the notebook NB1 to an optional color according to a user operation.

The control unit 11 stores the type, the attribute, the coordinates, the size, the connection open/close flag, and the connection sticky note ID of the sticky note management table 12d in association with an electronic sticky note ID of the electronic sticky note NB1-n created in the notebook NB1 (step S105).

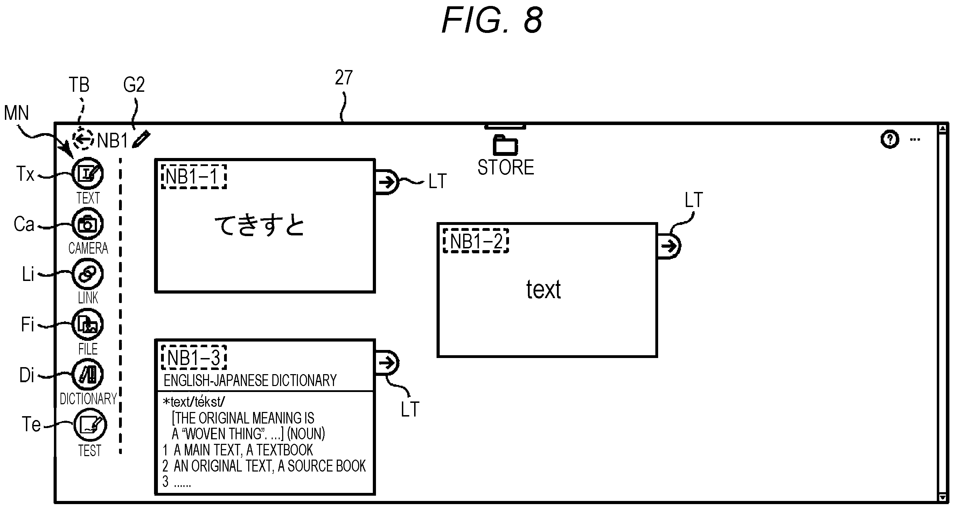

Fig. 8 illustrates an example of a screen displayed on the display unit 27 of the user terminal 20 through such processing. The example of the screen of Fig. 8 indicates a state where the three electronic sticky notes NB1-1 to NB1-3 are displayed. In Fig. 8, the electronic sticky note NB1-1 and the electronic sticky note NB1-2 are created by inputting a text on the basis of an operation of the [text] button Tx. The electronic sticky note NB1-3 is created by searching for an entry word of a dictionary and explanatory information thereof on the basis of an operation of the [dictionary] button Di.

When the optional electronic sticky note NB1-n is selected (step S106: YES) in a state where the notebook screen G2 of the notebook NB1 including the plurality of the electronic sticky notes NB1-n is displayed (step S101), the control unit 11 makes content of the selected electronic sticky note NB1-n additionally editable on the basis of the notebook menu MN in a similar manner to that described above (step S104).

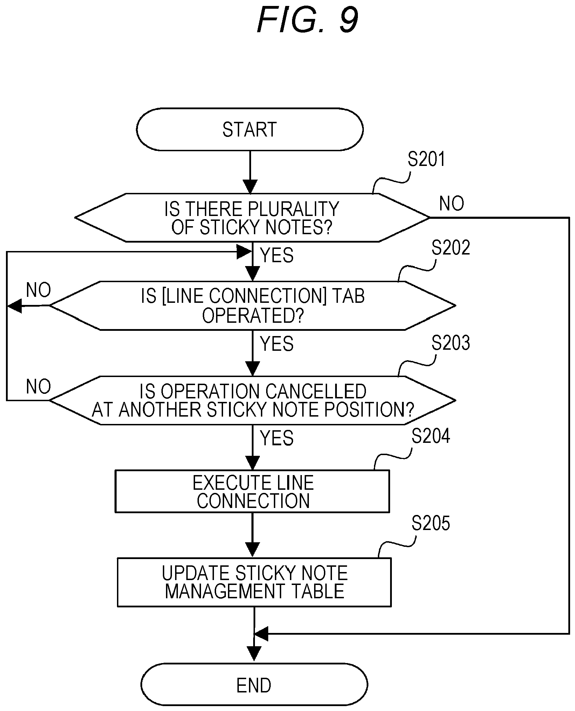

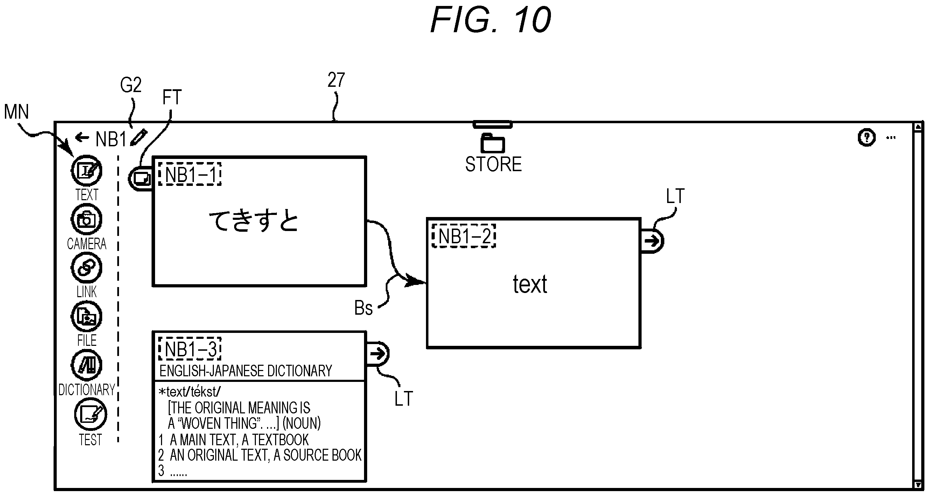

Fig. 9 is a flowchart illustrating line connection processing according to the server control program 12a of the information processing server 10. Fig. 10 illustrates an example of a screen including electronic sticky notes grouped by the line connection processing.

For example, a case will be described where, as illustrated in Fig. 8, there is the plurality of electronic sticky notes NB1-n included in the notebook NB1 in a state where the notebook screen G2 is displayed on the display unit 27 of the user terminal 20. In this case (step S201: YES), the control unit 11 stands by for a touch operation on the [line connection] tab LT added to the electronic sticky note NB1-n (step S202).

For example, in a case where the user wants to perform line connection of (connect) the electronic sticky note NB 1-1 and the electronic sticky note NB 1-2 by a manual operation and group them, the user moves (drags) the [line connection] tab LT of the electronic sticky note NB 1-1 in a state where the [line connection] tab LT is touched (step S202: YES). When this drag operation is canceled at a display position of the electronic sticky note NB 1-2 (step S203: YES), as illustrated in Fig. 10, the control unit 11 connects (performs line connection of) the electronic sticky note NB 1-1 and the electronic sticky note NB 1-2 with a solid blue connection arrow Bs from a connection source to a connection destination (step S204).

The control unit 11 updates the connection open/close flag and the connection sticky note ID of the sticky note management table 12d on the basis of the electronic sticky note NB 1-1 and the electronic sticky note NB 1-2 that are connected (subjected to the line connection) (step S205).

Thus, the user can manually connect (performs line connection of) the plurality of electronic sticky notes NB 1-n created in the notebook NB1 on the basis of an optional relationship of the user, and group and organize the plurality of electronic sticky notes NB 1-n.

Note that the connection arrow that connects (performs line connection of) the plurality of electronic sticky notes NB 1-n may be deleted according to a user operation. When the connection arrow is deleted, the connection (line connection) is also canceled.

As described above, the control unit 11 can classify the electronic sticky note NB 1-1 and the electronic sticky note NB 1-2 (an example of a plurality of obj ects) as the same group according to the manual line connection operation (an example of a third operation on the plurality of objects) between the electronic sticky note NB1-1 and the electronic sticky note NB 1-2.

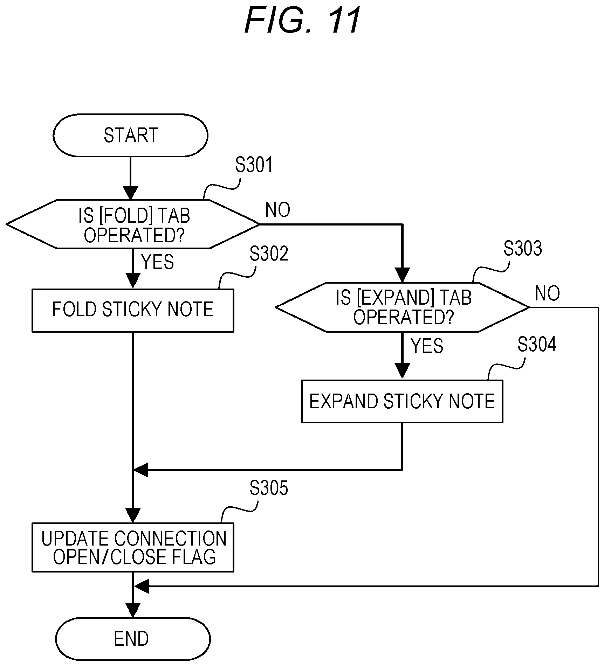

Fig. 11 is a flowchart illustrating electronic sticky note opening/closing (expanding/folding) processing according to the server control program 12a of the information processing server 10. Fig. 12 illustrates an example of a screen at the time of a folding operation in the electronic sticky note opening/closing processing.

For example, a case will be described where, as illustrated in Fig. 10, the electronic sticky note NB1-1 and the electronic sticky note NB1-2 are displayed in the state of being subjected to line connection (connected) by the connection arrow Bs. In this case, when a touch operation is performed on the [fold] tab FT added to a left end of the first electronic sticky note NB1-1 that is subjected to the line connection (connected) (step S301: YES), as illustrated in Fig. 12, the control unit 11 displays, in a folded manner, the electronic sticky note NB1-1 and the electronic sticky note NB1-2 that are displayed in an expanded manner so that the first electronic sticky note NB1-1 is on top and the second and subsequent electronic sticky notes (here, the electronic sticky note NB1-2) are overlapped below the first electronic sticky note NB1-1 in such a way as to sequentially shift positions of the electronic sticky notes (step S302).

The control unit 11 updates the connection open/close flag of the sticky note management table 12d according to the electronic sticky note NB1-1 and the electronic sticky note NB1-2 displayed in the folded manner (step S305).

Thus, for example, even when the number of the plurality of electronic sticky notes NBm-n created in the notebook NBm increases and the display becomes complicated, the user can organize the plurality of electronic sticky notes NBm-n grouped by the line connection (connection) as the simple notebook screen G2 by displaying the plurality of electronic sticky notes NBm-n in the folded manner.

Note that the display form in which the electronic sticky note NB1-1 and the electronic sticky note NB1-2 that are subjected to the line connection (connected) are displayed in the folded manner is not limited to the display form in which the electronic sticky notes NB1-n are displayed in the overlapping manner in the order of the line connection, and may be a display form in which the electronic sticky notes NB1-n are displayed in a line in a vertical or horizontal direction in the order of the line connection.

As illustrated in Fig. 12, the [expand] tab EXT is added to the left end of the first electronic sticky note NB1-1 displayed in the folded manner. When the touch operation is performed on the [expand] tab EXT (step S303: YES), as illustrated in Fig. 10, the control unit 11 displays, in the expanded manner as before, the second and subsequent electronic sticky notes (here, the electronic sticky note NB1-2) connected to the first electronic sticky note NB1-1 on the basis of the sticky note management table 12d (step S304).

The control unit 11 updates the connection open/close flag of the sticky note management table 12d according to the electronic sticky notes NB1-1 and NB1-2 displayed in the expanded manner (step S305).

The user can easily confirm content of each of the grouped electronic sticky notes NBm-n and a relationship therebetween by displaying, in the expanded manner as necessary, the plurality of electronic sticky notes NBm-n displayed in the folded state.

Note that, in the line connection processing of Fig. 9, the plurality of electronic sticky notes that is connected (subjected to the line connection) are first displayed in the expanded state, but in another embodiment, the plurality of electronic sticky notes that is connected (subjected to line connection) may be first displayed in the folded state.

### (Group Work Processing)

In the information processing system 1 according to the present embodiment, group work processing of providing a group work space that can be collaboratively edited by a plurality of accounts is executed. Hereinafter, the group work processing will be specifically described.

Note that, in the present embodiment, one account (user ID or the like) is allocated to each user participating in a group work to which a specific group ID is allocated. Furthermore, one user terminal 20 is connected to the network N for one user to which an account is allocated. Therefore, in the following description, the "user", the "user ID", and the "user terminal 20" may be used synonymously with the "account". Furthermore, the "account" may be appropriately read as the "user", the "user ID", and the "user terminal 20".

The information processing server 10 as an example of the information processing device that executes the group work processing displays, on each display unit 27 of the user terminal 20 operated by a plurality of participants, the notebook screen G5 (an example of an object arrangement screen which is a screen for displaying a group work space), which is a screen that enables the participants each having an account to share a notebook to which one group ID is allocated, and on which electronic sticky notes NBm-n (examples of objects) editable by the accounts are arranged. Then, when a certain participant (for example, a participant with a first account) instructs editing of an electronic sticky note NBm-n (an example of a first object) in the terminal 20 owned by the participant, the control unit 11 of the information processing server 10 detects that an editing state has been entered. Then, for the corresponding electronic sticky note NBm-n in the sticky note management table data 12d, a flag is set in the edit flag area and a user ID corresponding to the first account is stored in the editing user ID. Moreover, a status of the updated sticky note management table data 12d, that is, a state where the electronic sticky note NBm-n is being edited by the first account is transmitted to each user terminal 20 owned by participants other than the above participant (for example, participants with accounts other than the first account), and the display unit 27 of each user terminal 20 displays the electronic sticky note NBm-n (an example of the first object) in the editing state so as to be distinguishable from the other electronic sticky notes NBm-n, and reports that an edit authority for the electronic sticky note NBm-n is limited (the accounts other than the first account do not have the edit authority for the electronic sticky note NBm-n).

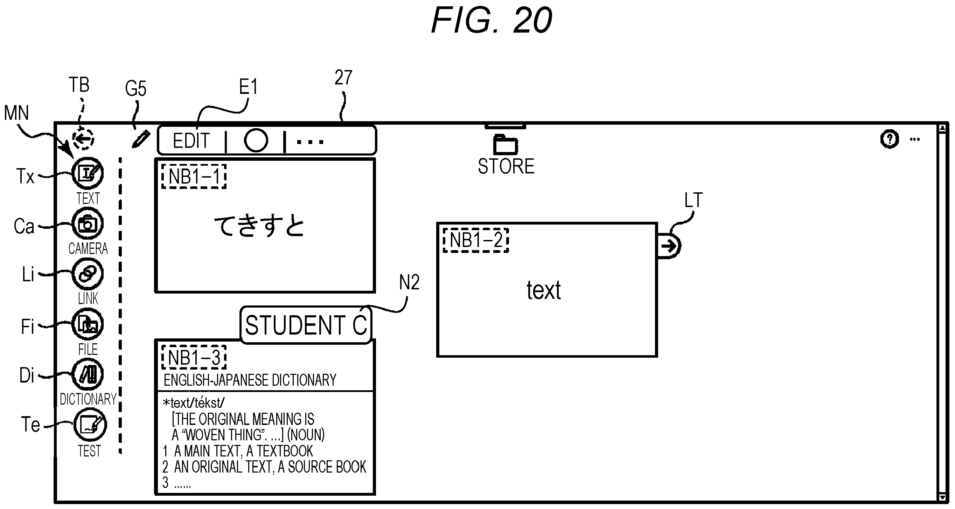

By performing such processing, the participants of the group work can distinguish the electronic sticky note NBm-n in the editing state by the participant other than themselves among the electronic sticky notes NBm-n displayed on the notebook screen G5 (see, for example, Figs. 20 to 23) from the other electronic sticky notes NBm-n. Therefore, usability when the object such as the electronic sticky note NBm-n is collaboratively edited is improved as compared with the related art.

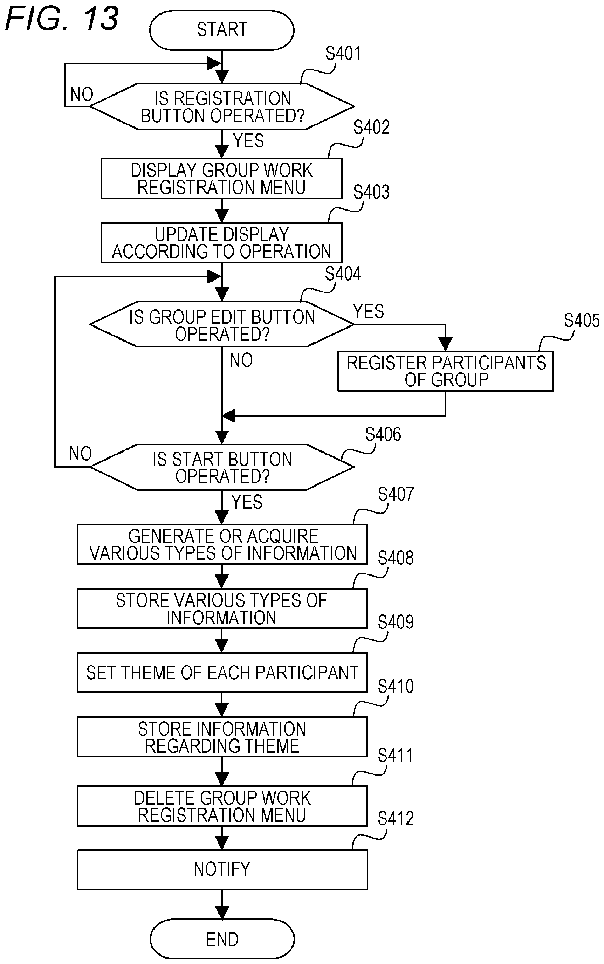

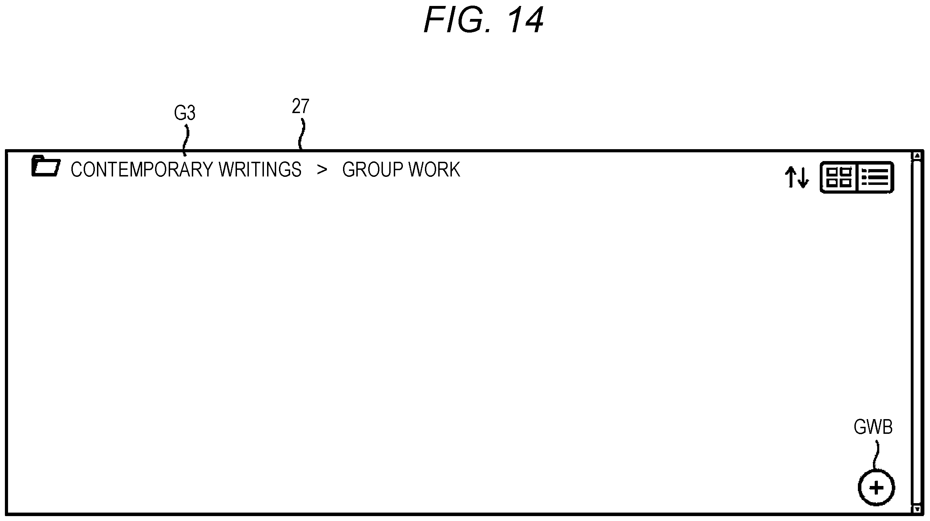

Fig. 13 is a flowchart illustrating group registration processing according to the server control program 12a of the information processing server 10. Figs. 14 to 17 are diagrams illustrating examples of screens displayed on the display unit 27 of the user terminal 20 at the time of the group registration processing.

In the following description, a teacher serves as a host to register a group GPx for a group work. In the group GPx, for example, students selected by the teacher are registered as participants in the group registration processing. In the group work, the students (and the teacher) registered as the participants share a group work space displayed as the notebook screen G5.

Note that, in the present embodiment, a symbol GPx (GP1, GP2, or the like) indicates a group ID (identification information). The symbol GPx may be read as a group name input by a user.

The participants of the group work space do not have to include the teacher, and may be limited to only the students registered as the participants. Furthermore, instead of the teacher, one of the students may serve as a host to register the group GPx.

Fig. 14 illustrates an example of a group list screen G3 displayed on the display unit 27 of the user terminal 20 of the teacher as the host. For convenience, the user terminal 20 of the teacher as the host is described as a "host user terminal 20".

The control unit 11 displays the group list screen G3 on the display unit 27 of the host user terminal 20 according to an operation on the host user terminal 20. In this state, the control unit 11 stands by for a touch operation on a registration button GWB (step S401).

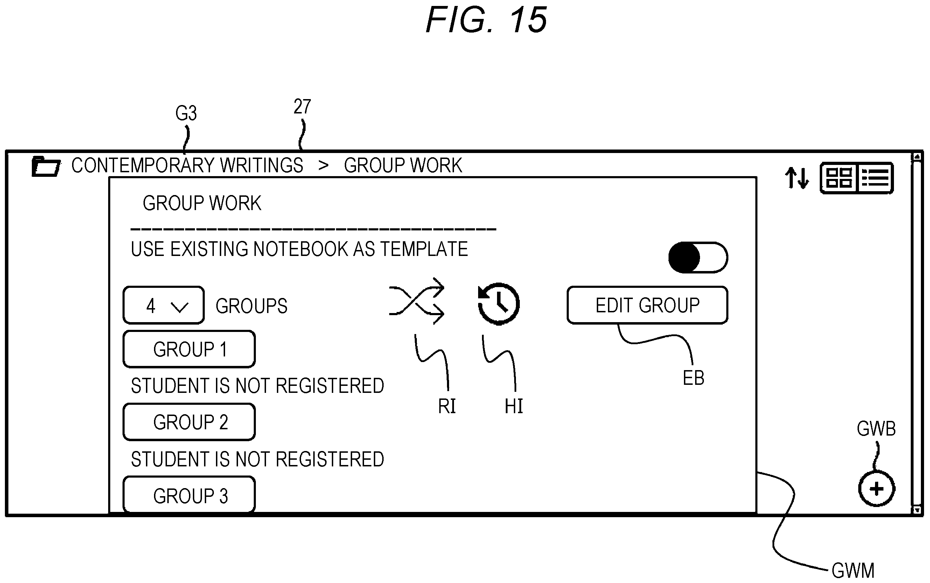

When the touch operation on the registration button GWB is detected (step S401: YES), the control unit 11 displays a group work registration menu GWM on the display unit 27 of the host user terminal 20 as illustrated in Fig. 15 (step S402).

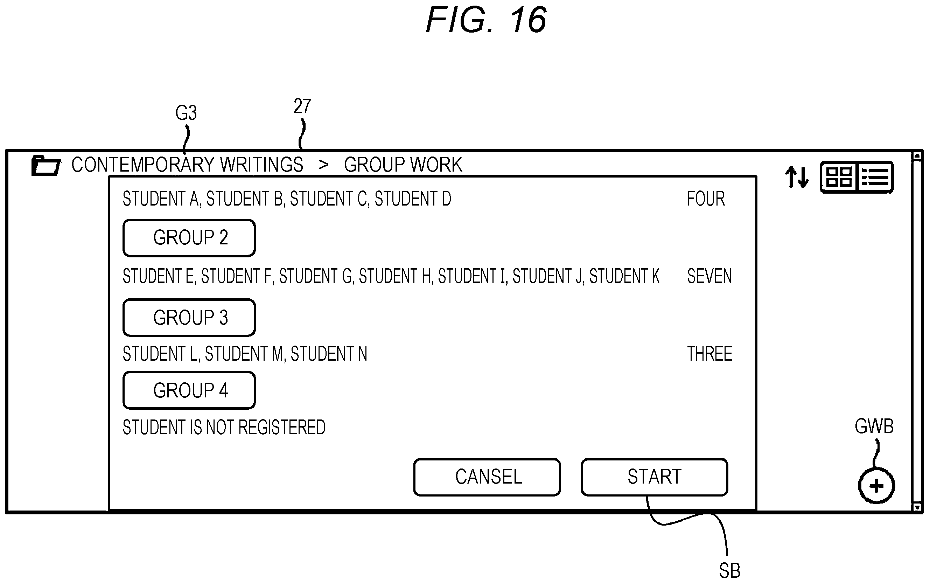

Note that the group work registration menu GWM can be scrolled and displayed. When a scroll operation is performed downward from the state of Fig. 15, the group work registration menu GWM is scrolled to, for example, a position illustrated in Fig. 16.

The group work registration menu GWM includes, for example, an item for setting the notebook NBm to be used in the group work, an item for setting the number of groups, a random icon RI, a history icon HI, a group edit button EB, a list of participants of each group GPx, and a start button SB.

The item for setting the notebook NBm to be used in the group work includes an explanatory sentence "USE EXISTING NOTEBOOK AS TEMPLATE" and a toggle button. In a case where the toggle button is off, a new (blank) notebook NBm is set. In a case where the toggle button is on, the notebook NBm registered in advance as a template is set.

For example, this template may be prepared in advance on a side of the information processing server 10, may be created in advance by the teacher by operating the host user terminal 20, or may be created before in another class or the like.

The teacher can set the number of groups by selecting a number displayed in a pull-down menu in the group work registration menu GWM. In the example of Fig. 15, 4 is selected as the number of groups.

The control unit 11 updates the display of the group work registration menu GWM on the display unit 27 of the host user terminal 20 according to a user operation (for example, on or off of the toggle button) for various items in the group work registration menu GWM (step S403).

In a state where the group work registration menu GWM is displayed, the control unit 11 stands by for a touch operation on the group edit button EB (step S404).

When the touch operation on the group edit button EB is detected (step S404: YES), the control unit 11 registers participants of each group GPx (step S405).

Here, the random icon RI and the history icon HI are radio buttons that are switched between a selected state and a non-selected state by a touch operation.

For example, when the touch operation on the group edit button EB is detected in a state where the random icon RI is selected (step S404: YES), the control unit 11 creates the groups GPx of the number set in the pull-down menu, and randomly selects and registers participants of each created group GPx (step S405). The participants to be selected are, for example, students having a common user attribute (the same class or the like).

For example, when the touch operation on the group edit button EB is detected in a state where the history icon HI is selected (step S404: YES), the control unit 11 reads a past group GPx stored in the user management data storage area 12c, and registers participants of the read group GPx (step S405).

For example, when the touch operation on the group edit button EB is detected in a state where the random icon RI and the history icon HI are not selected (step S404: YES), the control unit 11 displays the list of participants to be selected on the display unit 27 of the host user terminal 20. The control unit 11 creates the groups GPx of the number set in the pull-down menu. The control unit 11 selects and registers participants of each created group GPx according to an operation of the teacher on the list of the participants (step S405).

When a touch operation on the start button SB is detected (step S406: YES), the control unit 11 generates or acquires various types of information according to the content set in the group work registration menu GWM (step S407). The various types of information generated or acquired include, for example, a group ID, a group attribute, accounts (user IDs) of participants, and notebook data of each group GPx. The control unit 11 stores these pieces of information in the user management data storage area 12c in association with each other (step S408).

By storing the group ID and the accounts (user IDs) of the participants in association with each other in the user management data storage area 12c, an edit authority for the group work space of the group ID is given to the accounts (participants) associated with the group ID.

As described above, the accounts (that is, the participants of the group work) that share the notebook screen G5 (an example of the object arrangement screen) as the group work space are set according to a registration operation (an example of a fifth operation) performed by the teacher who is one of the users (an example of a specific account among a plurality of accounts).

The control unit 11 further sets a theme of each participant of each group GPx (step S409), and stores information regarding the set theme in the user management data storage area 12c in association with the account (user ID) of each participant of each group ID (step S410).

Here, the "theme" indicates, for example, a display color of each participant on the group work space. For example, when a participant edits the electronic sticky note NBm-n on the group work space, an icon describing the name of the participant (editor) is added to the electronic sticky note NBm-n to be edited and displayed in a color set for the editor, and the electronic sticky note NBm-n is displayed.

The "theme" is not limited to the display color of each participant on the group work space. In another embodiment, the "theme" may refer to identification information (for example, an image such as an icon) indicating each participant on the group work space.

The color of each participant of each group GPx is randomly set. Different colors are set for the respective participants so that each editor can be distinguished on the group work space.

For example, in a case where the teacher manually selects the participants from the list of the participants, the color of each participant may be determined in the order registered in the group GPx. As an example, red is set for the first registered participant, blue is set for the second registered participant, and green is set for the third registered participant.

In order to reduce a processing load and a data capacity, the number of themes that can be set in step S409 may be limited to a small number (for example, eight). Here, a case will be considered where the number of participants registered in the group GPx exceeds the number of themes (eight) that can be set in step S409. In this case, for example, the control unit 11 randomly sets a theme (color) from among the eight in the order of registration of the participants. Thus, for example, it is assumed that the themes are set in the order of red, blue, green... to the first to eighth participants. In this case, the control unit 11 sets the themes for the ninth and subsequent participants in the same color order (in the order of red, blue, green...).

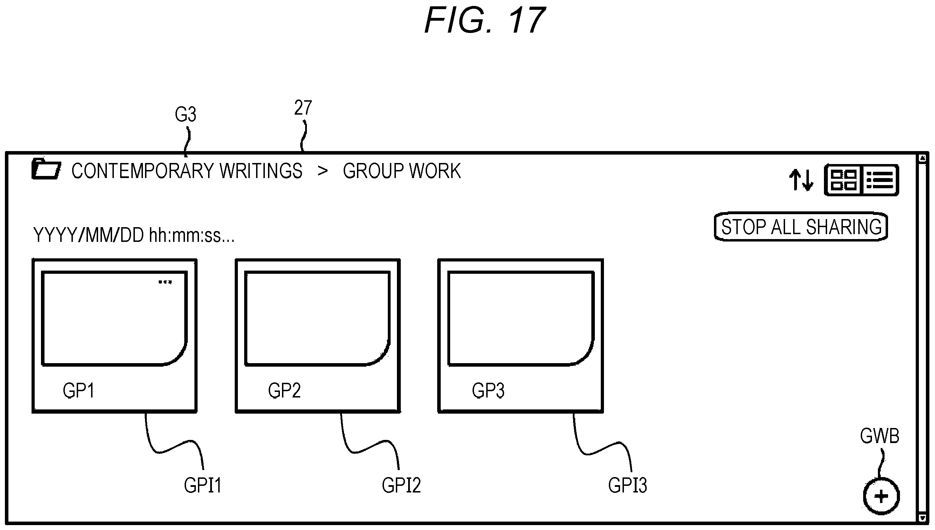

The control unit 11 deletes the group work registration menu GWM from the group list screen G3 (step S411). Thus, the group list screen G3 exemplified in Fig. 17 is displayed on the display unit 27 of the host user terminal 20.

In the example of Fig. 17, three groups GP1 to GP3 created according to an operation of the teacher on the group work registration menu GWM are displayed in a list in a form of group icons GPI1 to GPI3.

The control unit 11 notifies the participants (the user terminals 20 of the students as the participants) of each group GPx of the registration to the group work (step S412). The students who have received the notification can know the registration to the group work. For convenience, the user terminal 20 of the student as the participant is described as a "guest user terminal 20".

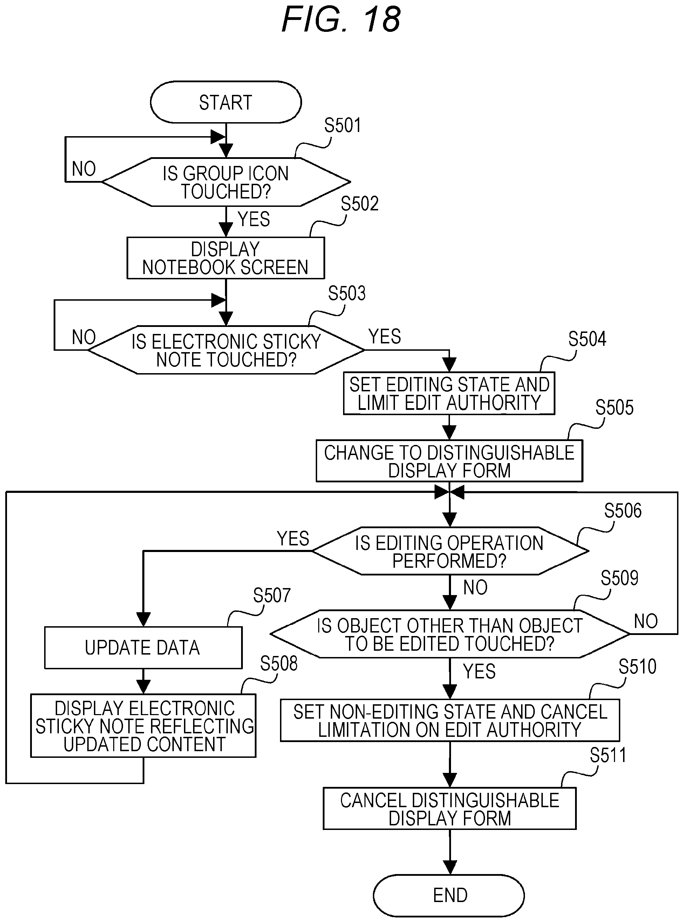

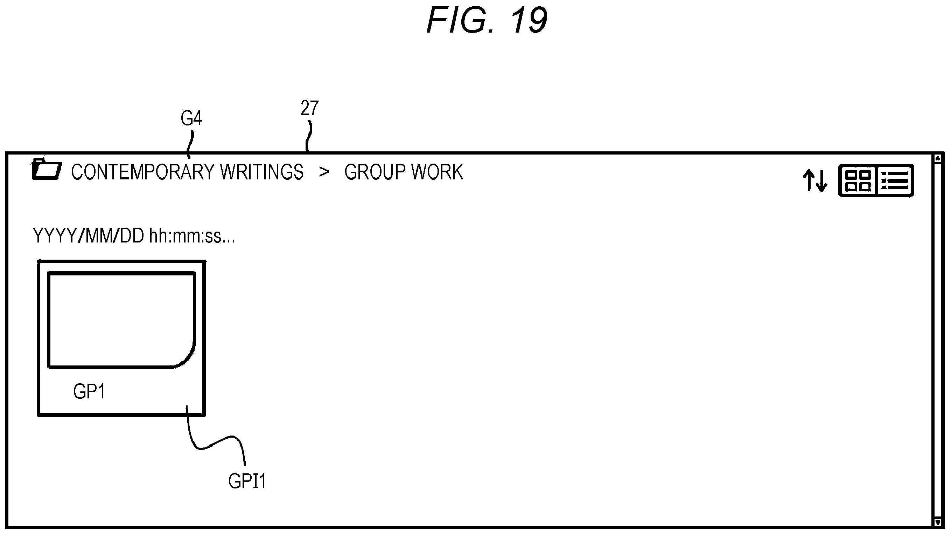

Fig. 18 is a flowchart illustrating the group work processing according to the server control program 12a of the information processing server 10. Figs. 19 to 24 are diagrams illustrating examples of screens displayed on the display unit 27 of the user terminal 20 at the time of the group work processing.

Fig. 19 illustrates an example of a group list screen G4 displayed on the display unit 27 of the guest user terminal 20.

The control unit 11 displays the group list screen G4 on the display unit 27 of the guest user terminal 20 according to an operation of a student on the guest user terminal 20. On the group list screen G4 exemplified in Fig. 19, a group GP1 in which the student operating the guest user terminal 20 is registered as a participant is displayed in a form of a group icon GPI1.

In this state, the control unit 11 stands by for a touch operation on the group icon (here, the group icon GPI1) (step S501).

When the touch operation on the group icon is detected (step S501: YES), the control unit 11 displays the notebook screen G5 corresponding to the touch operation on the display unit 27 of the guest user terminal 20 (step S502). Thus, the student enters a state of participating in a group work of the group GPx (here, the group GP1).

Note that the teacher can participate in the group work of the group GPx by selecting the group GPx from the group list screen G3 displayed on the display unit 27 of the host user terminal 20.

Furthermore, a user (student/ teacher) can exit from the group work in which the user is participating by performing a touch operation on a [←] (close) button TB on the notebook screen G5.

The notebook screen G5 is a screen for displaying a group work space, and is an example of the object arrangement screen. That is, the control unit 11 executes processing of generating the object arrangement screen which is a screen that can be shared by the plurality of accounts and on which objects (for example, the electronic sticky notes NBm-n) that can be edited by the accounts are arranged, and displaying, on the display screen of each of the plurality of accounts (for example, the display unit 27 of the guest user terminal 20).

According to a user operation on the notebook screen G5, for example, the control unit 11 executes the electronic sticky note creation processing illustrated in Fig. 5 to create the electronic sticky notes NBm-n, executes the line connection processing illustrated in Fig. 9 to perform line connection of (connect) the plurality of electronic sticky notes NBm-n, and executes the electronic sticky note opening/closing processing illustrated in Fig. 11 to display the plurality of electronic sticky notes NBm-n in an expanded manner and in a folded manner.

Here, it is assumed that, as a result of the user operation performed on the notebook screen G5, a screen similar to that in Fig. 8 is displayed on the display unit 27 of the user terminal 20 of the user participating in the group GPx (for example, the group GP1). That is, three electronic sticky notes NB1-1, NB1-2, and NB1-3 are displayed on the notebook screen G5.

As described above, the control unit 11 executes processing of creating the electronic sticky notes NBm-n (examples of the objects) according to a creation operation (an example of a fourth operation) of the electronic sticky notes NBm-n performed by the user terminal 20 (account) and arranging the created electronic sticky notes NBm-n on the notebook screen G5 (an example of the object arrangement screen) so that the electronic sticky notes NBm-n can be shared by the plurality of user terminals 20 (accounts).

The control unit 11 stands by for a touch operation on the electronic sticky note NBm-n arranged on the notebook screen G5 (step S503).

When the touch operation on the electronic sticky note NBm-n is detected (step S503: YES), the control unit 11 refers to the sticky note management table 12d of Fig. 3 for the electronic sticky note NBm-n on which the touch operation has been performed, sets a flag in the edit flag area corresponding to the electronic sticky note NBm-n, and stores a user ID of the user who has performed the touch operation in the editing user ID. In this way, an edit authority for the electronic sticky note NBm-n is limited to the user who has performed the touch operation (step S504). For example, when a student A performs a touch operation on the electronic sticky note NB 1-1, the control unit 11 performs transition of a state of the electronic sticky note NB 1-1 to a state where only the student A among the participants of the group work can perform editing.

The status of and the setting information regarding the edit authority for the electronic sticky note NBm-n are accumulated in the sticky note management table data storage area 12d as a log (history).

As described above, when a second operation (for example, the touch operation on the electronic sticky note NBm-n) is detected in the first account (for example, the student A), the control unit 11 detects that the electronic sticky note NBm-n is in an editing state by the student A, and executes processing of limiting the edit authority for the electronic sticky note NBm-n in accounts other than the student A (accounts other than the first account).

For convenience, the participant who has performed transition of the electronic sticky note NBm-n to the editing state is described as an "editor", and the participants other than the editor are described as "non-editors".

The control unit 11 changes a display form of the electronic sticky note NBm-n in the user terminals 20 of the non-editors (step S505). Specifically, in the user terminals 20 of the non-editors, the control unit 11 changes the display form of the electronic sticky note NBm-n subjected to the transition to the editing state by the editor to a display form distinguishable from the other electronic sticky notes NBm-n, and displays the electronic sticky note NBm-n on the display unit 27.

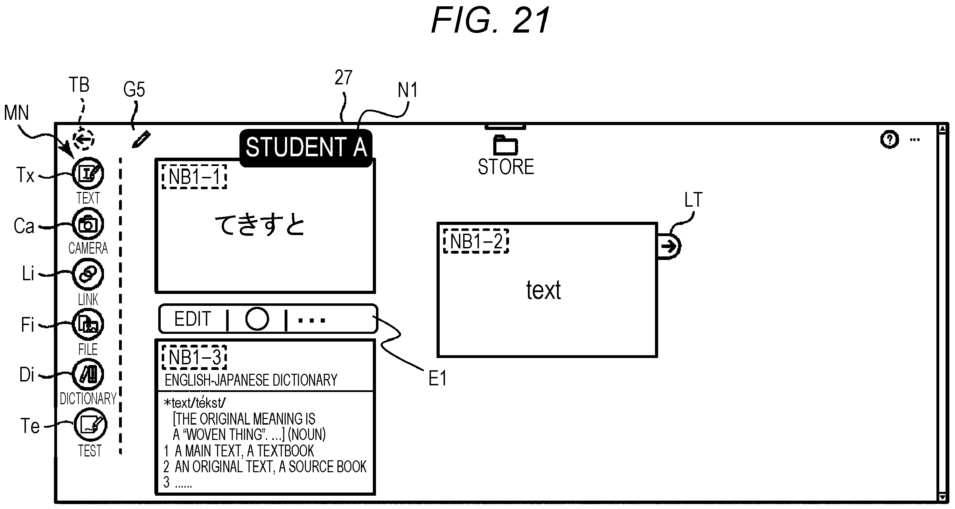

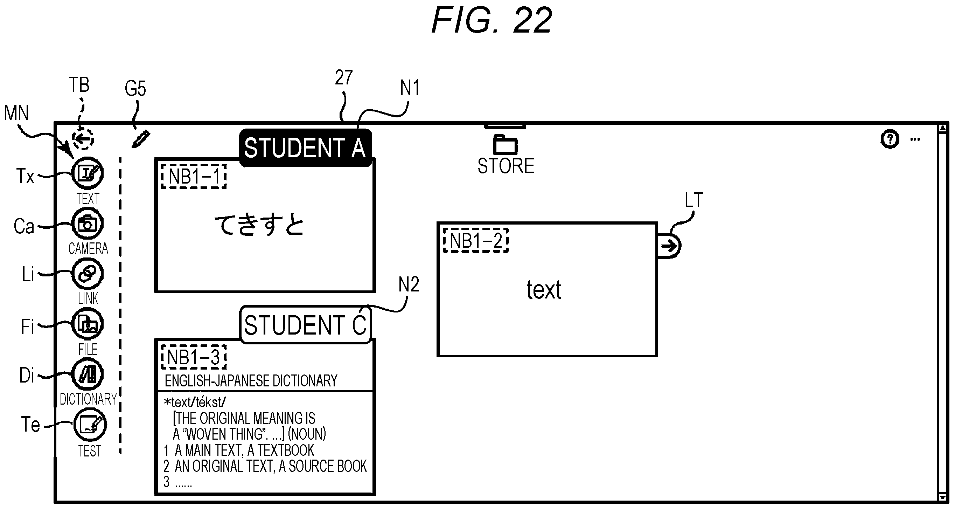

Fig. 20 illustrates an example of the notebook screen G5 displayed on the display unit 27 of the user terminal 20 of the student A. Fig. 21 illustrates an example of the notebook screen G5 displayed on the display unit 27 of the user terminal 20 of a student C. Fig. 22 illustrates an example of the notebook screen G5 displayed on the display units 27 of the user terminals 20 of students (students B and D) other than the students A and C.

In the examples of Figs. 20 to 22, the student A is an editor of the electronic sticky note NB1-1, and the student C is an editor of the electronic sticky note NB1-3. The electronic sticky note NB 1-2 is not in an editing state.

In the user terminals 20 of the student A (see Fig. 20) and the students B and D (see Fig. 22), the control unit 11 changes a display form of the electronic sticky note NB1-3 to a display form distinguishable from the other electronic sticky notes NB1-1 and NB1-2, and displays the electronic sticky note NB1-3 on the display units 27 (step S505).

Specifically, the control unit 11 adds an icon N2 in which the name (which is an example of account information, and is a user name of an account) of the student C is described to the electronic sticky note NB1-3 to display. Thus, in the user terminals 20 of the participants other than the student C (the student A and the students B and D), the electronic sticky note NB1-3 is displayed so as to be distinguishable from the other electronic sticky notes NB1-1 and NB1-2. Therefore, the participants other than the student C can grasp that the electronic sticky note NB1-3 is being edited by another person (specifically, the student C). Therefore, usability when the object such as the electronic sticky note NBm-n is collaboratively edited is improved as compared with the related art.

Furthermore, the control unit 11 adds an edit control button E1 to the electronic sticky note NB1-3 to display on the user terminal 20 of the student C (see Fig. 21). The student C can operate the edit control button E1 to perform, for example, editing such as line connection (connection) of the electronic sticky note NB1-3 to another electronic sticky note NB 1-1 or NB-2 to perform grouping. An editing state of the object may include, for example, a state where connection processing (line connection processing) from a first electronic sticky note (electronic sticky note NB 1-1) corresponding to the first object to at least one other electronic sticky note is executed.

Furthermore, in the user terminals 20 of the student C (see Fig. 21) and the students B and D (see Fig. 22), the control unit 11 changes a display form of the electronic sticky note NB1-1 to a display form distinguishable from the other electronic sticky notes NB1-2 and NB1-3, and displays the electronic sticky note NB1-1 on the display units 27 (step S505).

Specifically, the control unit 11 adds an icon N1 in which the name (which is an example of the account information, and is a user name of an account) of the student A is described to the electronic sticky note NB1-1 to display in a manner different from the display state before editing is instructed. Thus, in the user terminals 20 of the participants other than the student A (the students B to D), the electronic sticky note NB1-1 is displayed so as to be distinguishable from the other electronic sticky notes NB1-2 and NB1-3. Therefore, the participants other than the student A can grasp that the electronic sticky note NB1-1 is being edited by another person (specifically, the student A). The above processing in the control unit 11 in the information processing server 10 contributes to preventing multiple students from performing incorrect operations. Therefore, usability when the object such as the electronic sticky note NBm-n is collaboratively edited is improved as compared with the related art.

Furthermore, the control unit 11 adds the edit control button E1 to the electronic sticky note NB1-1 to display on the user terminal 20 of the student A (see Fig. 20). The student A can edit the electronic sticky note NB1-1 by operating the edit control button E1.

As described above, in response to detecting that the first object (for example, the electronic sticky note NB1-1) is in the editing state by the first account (for example, the student A), the control unit 11 executes, in the accounts other than the student A (the accounts other than the first account), processing of displaying the first object (for example, the electronic sticky note NB1-1) on the display unit 27 so as to be distinguishable from the other objects (for example, the electronic sticky notes NB1-2 and NB1-3). In addition, the control unit 11 displays the first object (for example, the electronic sticky note NB1-1) on the display unit 27 so as to be distinguishable from the other objects (for example, the electronic sticky note NB1-2 and NB1-3) by adding the account information regarding the first account (for example, the name of the student A) to the first object (for example, the electronic sticky note NB1-1).

More specifically, the icons N1 and N2 are displayed in themes (colors) set for the students A and C, respectively. Therefore, the participants can easily grasp who is editing the electronic sticky note NBm-n.

Furthermore, the electronic sticky note NBm-n is displayed in, for example, a theme (color) set for a creator of the electronic sticky note NBm-n. That is, the electronic sticky note NBm-n (an example of the object) is displayed on the display screen (for example, the display unit 27 of the user terminal 20) so as to be distinguishable for each creator (account) who has performed the creation operation (an example of the fourth operation) of the electronic sticky note NBm-n.

Thus, the participants can easily grasp who has created the electronic sticky note NBm-n.

Furthermore, the electronic sticky note NBm-n may be displayed in a theme (color) set for an editor only during the editing state. Thus, the participants can easily grasp who is editing the electronic sticky note NBm-n.

Furthermore, the electronic sticky note NBm-n that has been edited even once may be displayed in a theme (color) of a final editor. Thus, the participants can easily grasp who has edited the electronic sticky note NBm-n.

When the editing operation on the electronic sticky note NBm-n is detected (step S506: YES), the control unit 11 updates content of the electronic sticky note NBm-n and notebook data according to the editing operation (step S507), and displays the electronic sticky note NBm-n reflecting the updated content on the display unit 27 of each user terminal 20 participating in the group work (step S508).

The control unit 11 stands by for a touch operation on a screen area other than the electronic sticky note NBm-n in the editing state in the user terminal 20 of the editor (step S509).

When the touch operation on the screen area other than the electronic sticky note NBm-n in the editing state is detected (step S509: YES), the control unit 11 returns the status of the electronic sticky note NBm-n in the editing state to the original status (sets the electronic sticky note NBm-n in a non-editing state), and cancels the limitation on the edit authority for the electronic sticky note NBm-n (step S510).

The control unit 11 further cancels the display form of the electronic sticky note NBm-n whose editing state has been canceled, which can be distinguishable from the display forms of the other electronic sticky notes NBm-n (step S511).

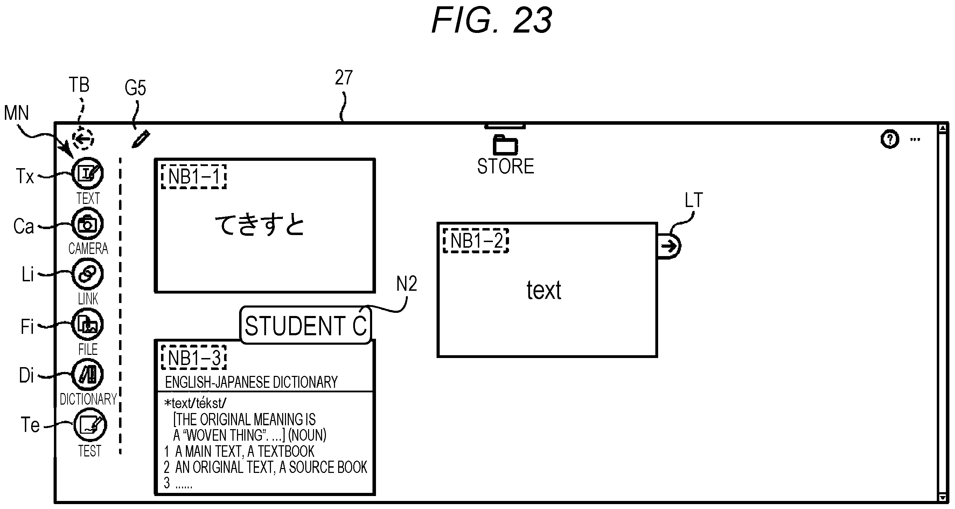

For example, when the touch operation on the screen area other than the electronic sticky note NB1-1 is detected in the user terminal 20 of the student A (see Fig. 20) (step S509: YES), the control unit 11 returns the status of the electronic sticky note NB1-1 to the original status and cancels the limitation on the edit authority for the electronic sticky note NB1-1 (step S510), and further, as illustrated in Fig. 23, deletes the icon N1 added and displayed on the electronic sticky note NB1-1, thereby canceling the display form of the electronic sticky note NB1-1, which can be distinguished from the display forms of the other electronic sticky notes NB1-2 and NB1-3 (step S511).

As described above, when a first operation (for example, the touch operation on the screen area other than the electronic sticky note NB1-1 in the editing state) is detected in the first account (for example, the student A), the control unit 11 executes processing of canceling the editing state of the electronic sticky note NB1-1 (an example of the first object) and canceling the display form of the electronic sticky note NB1-1, which can be distinguished from the display forms of the other electronic sticky notes NB1-2 and NB 1-3.

Furthermore, for example, it is assumed that, as a result of the user operation performed on the notebook screen G5, a screen similar to that in Fig. 10 is displayed on the display unit 27 of the user terminal 20 of the user participating in the group GPx (for example, the group GP1). That is, three electronic sticky notes NB1-1, NB1-2, and NB1-3 are displayed on the notebook screen G5, and the electronic sticky note NB1-1 and the electronic sticky note NB1-2 are displayed in a line connection (connected) state.

In this state, when a touch operation on the electronic sticky note NB1-1 or the electronic sticky note NB1-2 is detected (step S503: YES), the control unit 11 collectively sets statuses of the two electronic sticky notes NB1-1 and NB1-2 that are subjected to the line connection (connected) to the editing state, and collectively limits edit authorities for the two electronic sticky notes NB1-1 and NB1-2 to the user who has performed the touch operation (step S504). For example, when the student A performs a touch operation on the electronic sticky note NB1-1 or the electronic sticky note NB1-2, the control unit 11 performs transition of states of the electronic sticky note NB 1-1 and the electronic sticky note NB1-2 to states where only the student A among the participants of the group work can perform editing.

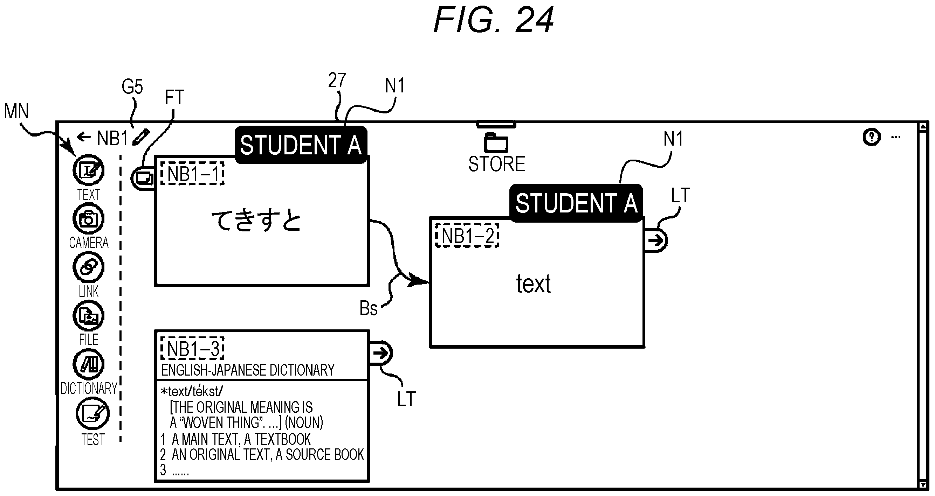

Next, the control unit 11 changes the display forms of the electronic sticky note NB1-1 and the electronic sticky note NB1-2 in the user terminals 20 of the students B to D as the non-editors (step S505). Specifically, as illustrated in Fig. 24, the control unit 11 adds, in the user terminals 20 of the students B to D, the icon N1 on which the name of the student A is described to the electronic sticky note NB1-1 and the electronic sticky note NB1-2 to display.

Thus, in the user terminals 20 of the participants other than the student A (the students B to D), the electronic sticky note NB1-1 and the electronic sticky note NB1-2 are displayed so as to be distinguishable from the another electronic sticky note NB1-3. Therefore, the participants other than the student A can grasp that the electronic sticky note NB1-1 and the electronic sticky note NB1-2 are being edited by another person (specifically, the student A). Therefore, usability when the object such as the electronic sticky note NBm-n is collaboratively edited is improved as compared with the related art.

In this example, for example, the participant can collectively acquire the edit authorities for the plurality of related electronic sticky notes NBm-n, and can collectively display the electronic sticky notes NBm-n so as to be distinguishable from the other electronic sticky notes NBm-n in the user terminals 20 of the other participants. Therefore, usability when the object such as the electronic sticky note NBm-n is collaboratively edited is further improved as compared with the related art.

As described above, in response to detecting that, after the operation of grouping the plurality of objects into the same group by a first user (for example, the operation of connecting (performing line connection of) the electronic sticky note NB 1-1 and the electronic sticky note NB 1-2 by the student A) is detected, one of the plurality of grouped objects (for example, the electronic sticky note NB 1-1 or the electronic sticky note NB 1-2) is in the editing state, the control unit 11 displays the electronic sticky note NB1-1 and the electronic sticky note NB1-2 on the display screen (the display unit 27 of the user terminal 20) in the accounts other than the student A so as to be distinguishable from the another electronic sticky note NB 1-3 (more specifically, so as to be distinguishable that the electronic sticky note NB 1-1 and the electronic sticky note NB 1-2 are in the editing state by the student A).

The above-described embodiments have been given as specific examples to facilitate understanding of the invention, and the present invention is not limited to the above-described embodiments, and needs to be understood as including various modifications and alternative forms of the above-described embodiments. For example, it will be understood that the above-described embodiments can be embodied by modifying the components without departing from the spirit and scope thereof. Furthermore, it will be understood that various embodiments can be implemented by appropriately combining a plurality of components disclosed in the above-described embodiments. Moreover, a person skilled in the art will understand that various embodiments can be implemented by deleting some components from all the components indicated in the embodiments or adding some components to the components indicated in the embodiments. That is, the program, the server device, the client device, the system, the method implemented by the server device, and the method implemented by the client device can be variously modified and changed without departing from the description of the scope of the claims.

For example, the hardware configurations of the information processing server 10 and the user terminal 20 are not particularly limited. As an example, the information processing server 10 is illustrated as a single device in Fig. 1, but may include a plurality of devices. The information processing server 10 and the user terminal 20 may be any computers as long as each includes a processor and a memory. The above-described functional configurations included in the information processing server 10 and the user terminal 20 may be implemented by a processor executing a program on a memory.

The processor is not particularly limited, but may be, for example, a central processing unit (CPU) or a graphics processing unit (GPU). Furthermore, the processor may include a hardware circuit such as a field-programmable gate array (FPGA) or an application specific integrated circuit (ASIC). The memory is not particularly limited, but may be a semiconductor memory such as a random access memory (RAM), a read only memory (ROM), or a solid state drive (SSD), a magnetic storage device such as a hard disk drive (HDD), or an optical storage device.

## Claims

1. An information processing device comprising
a control unit (11, 21) configured to execute processing of:
generating an object arrangement screen which is a screen shareable among a plurality of users corresponding to a plurality of accounts and on which a plurality of objects is arranged;
displaying the object arrangement screen on a display screen of a display device operated by each of the plurality of users;
detecting whether or not a first user among the plurality of users is in an editing state having an edit authority for a first object among the objects on the object arrangement screen; and
displaying, in response to detecting that the first user is in the editing state, the plurality of objects and the first object such that it is distinguishable that the first object is in the editing state in which the first user has the edit authority, on a display screen of a display device operated by a user other than the first user among the plurality of display devices.

2. The information processing device according to claim 1, wherein,
in response to detecting that the first user is in the editing state of the first object, the control unit (11,21) executes processing of limiting editing of the first object by the user other than the first user.

3. The information processing device according to claim 1, wherein, in response to detecting after an operation of grouping the plurality of objects into the same group by the first user is detected that one of the plurality of grouped objects is in the editing state, the control unit (11, 21) executes processing of distinguishably displaying that the plurality of grouped objects is in the editing state.

4. The information processing device according to claim 1, wherein
the object is an electronic sticky note, and
the editing state is a state where connection processing from a first electronic sticky note corresponding to the first object to a plurality of electronic sticky notes is executed.

5. An information processing method executed by an information processing device that generates an object arrangement screen which is a screen shareable among a plurality of users corresponding to a plurality of accounts and on which a plurality of objects is arranged, displays the object arrangement screen on a display screen of a display device operated by each of the plurality of users, the information processing method comprising steps of:
detecting whether or not a first user among the plurality of users is in an editing state having an edit authority for a first object among the objects on the object arrangement screen; and
displaying, in response to detecting that the first user is in the editing state, the plurality of objects and the first object such that it is distinguishable that the first object is in the editing state in which the first user has the edit authority, on a display screen of a display device operated by a user other than the first user among the plurality of display devices.

6. The information processing method according to claim 5, further comprising a step of
limiting, in response to detecting that the first user is in the editing state of the first object, editing of the first object by the user other than the first user.

7. The information processing method according to claim 5, further comprising a step of
distinguishably displaying that, in response to detecting after an operation of grouping the plurality of objects into the same group by the first user is detected that one of the plurality of grouped objects is in the editing state, the plurality of grouped objects is in the editing state.

8. The information processing method according to claim 5, wherein
the object is an electronic sticky note, and
the editing state is a state where connection processing from a first electronic sticky note corresponding to the first object to a plurality of electronic sticky notes is executed.

9. A program included in an information processing device that generates an object arrangement screen which is a screen shareable among a plurality of users corresponding to a plurality of accounts and on which a plurality of objects is arranged, displays the object arrangement screen on a display screen of a display device operated by each of the plurality of users, the program for causing the computer to execute procedures of:
detecting whether or not a first user among the plurality of users is in an editing state having an edit authority for a first object among the objects on the object arrangement screen; and
displaying, in response to detecting that the first user is in the editing state, the plurality of objects and the first object such that it is distinguishable that the first object is in the editing state in which the first user has the edit authority, on a display screen of a display device operated by a user other than the first user among the plurality of display devices.

10. The program according to claim 9, for causing the computer to further execute a procedure of
limiting, in response to detecting that the first user is in the editing state of the first object, editing of the first object by the user other than the first user.

11. The program according to claim 9, for causing the computer to further execute a procedure of
distinguishably displaying that, in response to detecting after an operation of grouping the plurality of objects into the same group by the first user is detected that one of the plurality of grouped objects is in the editing state, the plurality of grouped objects is in the editing state.

12. The program according to claim 9, wherein
the object is an electronic sticky note, and
the editing state is a state where connection processing from a first electronic sticky note corresponding to the first object to a plurality of electronic sticky notes is executed.
